# EUROPÄISCHE PATENTSCHRIFT

(11) **EP 0 540 510 B1**
(45) Veröffentlichungstag und Bekanntmachung des Hinweises auf die Patenterteilung: **16.03.1994**
(21) Anmeldenummer: 90900053.1
(22) Anmeldetag: 06.12.1989
(51) Int. Cl.: H01H 1/00, B25J 7/00, F03G 7/06, F15C 5/00

(54) **MIKROMECHANISCHER MANIPULATOR**
MICROMECHANIC MANIPULATOR
MANIPULATEUR MICROMECANIQUE

(30) Priorität: 09.12.1988 DE 3841557
(43) Veröffentlichungstag der Anmeldung: 12.05.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: BENECKE, Wolfgang, D-1000 Berlin 30 (DE)
(74) Vertreter: Schoppe, Fritz, Dipl.-Ing.
(86) Internationale Anmeldenummer: DE8900755
(87) Internationale Veröffentlichungsnummer: WO9006587

(56) Entgegenhaltungen:
- EP-A- 0 045 250
- US-A-44 234 01
- Patent Abstracts of Japan, Vol. 8, No. 284 (M-384)(1721), 26 December 1984, & JP-A-59 150983

## Beschreibung

Die Erfindung betrifft einen mikromechanischen Manipulator, mit einem Substrat, Heizelementen und wenigstens einem Manipulatorarm. Der Manipulatorarm ist aus einer Platte und einer Schicht zusammengesetzt, die die Platte wenigstens teilweise überdeckt. Die Bewegung des Manipulatorarmes beruht darauf, daß die Platte und die Schicht aus verschiedenen Materialien mit unterschiedlichen thermischen Ausdehnungskoeffizienten gefertigt sind. Bei Veränderung der Temperatur dehnen sich die fest verbundenen Materialien unterschiedlich aus, was zu einer Auslenkung des Manipulatorarmes führt (Bimetall-Effekt).

Mit Hilfe von Mikromanipulatoren können Gegenstände über mikroskopisch kleine Entfernungen bewegt werden. Sie eignen sich deshalb zur Präzisionsjustierung. Mikromanipulatoren können als Mikro-Ventilklappen, Mikro-Schalter oder Mikro-Spiegel zur Lichtablenkung eingesetzt werden.

### Stand der Technik

Solche Mikromanipulatoren sind z. B. in der Schrift "Micromechanical Membran Switches on Silicon" (IBM Journal Research Development, Vol. 23, 1979, S. 376 - 385) oder in "Thermally Excited Silicon Microactuators" (IEEE Transactions on Electron Device, Vol. 35, 1988, S. 758 - 763) beschrieben. Den bekannten Mikromanipulatoren ist gemeinsam, daß die Bewegung der Manipulatorarme aus der Substratoberfläche heraus führt; eine Bewegung in der Oberflächenebene ist bisher nicht möglich.

Mit der erstgenannten Schrift ist ein Manipulator mit einem Manipulatorarm bekannt geworden, der aus zwei Schichten mit unterschiedlichen thermischen Ausdehnungskoeffizienten besteht. Der Arm ist in geringem Abstand zur Substratoberfläche angeordnet und weist ein festes und ein loses Ende auf, welches bei Temperaturveränderung eine Bewegung in etwa senkrecht zur Substratoberfläche ausführt.

Aus mehreren Veröffentlichungen, beispielsweise in der Patentschrift der US 4740410, oder in der Veröffentlichung "Micro gears and Turbines etched from silicon" (Sensors and Actuators, 12, (1987), S. 341 - 348) sind bewegbare mikromechanische Elemente wie Gelenke oder Turbinenräder bekannt. Bisher fehlt allerdings ein Antrieb, der mit auf demselben Chip integriert ist. Die Elemente werden z. B. mit Hilfe eines von außen zugeführten Luftstromes bewegt.

### Darstellung der Erfindung

Aufgabe der Erfindung ist es, einen mikromechanischen Manipulator mit einem Manipulatorarm auf Bimaterialbasis anzugeben, der einfach herstellbar ist und als Antrieb für bewegbare mikromechanische Elemente dient, die in einer Substratoberfläche integriert sind.

Diese Aufgabe wird bei einem gattungsgemäßen Manipulator durch die kennzeichnenden Merkmale des Anspruchs 1 gelöst.

Vorteilhafte Ausgestaltungen und Weiterbildungen der Erfindung sind in den Unteransprüchen gekennzeichnet.

Fertigungstechnische Vorteile bietet die Ausgestaltung nach Anspruch 2, da hier ein in der Mikroelektronik häufig verwendetes Ausgangsmaterial als Substrat dient.

Die Platte wird aus Polysilizium und die Schicht aus Metall gefertigt. Metall, z. B. Gold besitzt einen wesentlich höheren thermischen Ausdehnungskoeffizienten als Poly-Silizium. Die Kombination dieser beiden Materialien bewirkt einen stark ausgeprägten Bimaterial-Effekt. Als Heizelement dienen nach Anspruch 3 elektrische Widerstände, die auf der Platte oder der Schicht aufgebracht werden. Besonders vorteilhaft ist eine Ausgestaltung, bei welcher die Platte selbst oder die Schicht oder beide als Heizwiderstand dienen. Wie in Anspruch 4 gekennzeichnet, werden alle Elemente des mikromechanischen Manipulators auf einen Halbleiterchip integriert. Auf demselben Chip können bei dieser Ausgestaltung auch die Stromversorgung für die Heizelemente und weitere elektronische Schaltungen integriert werden.

Nach Anspruch 5 ist die Platte des Manipulatorarmes als langgestrecktes Rechteck ausgebildet. Mit dieser Form wird eine optimale Wirkung der unterschiedlichen thermischen Ausdehnungskoeffizienten erreicht. Nach Anspruch 6 kann der mikromechanische Manipulator zu einem Ventil weitergebildet werden. Das Substrat weist bei dieser Weiterbildung eine Ventilöffnung auf, die vom losen Ende des Manipulatorarmes verschlossen wird, solange der Arm nicht geheizt wird. Bei Einschalten des Heizstromes gibt der Arm die Öffnung frei und schaltet das Ventil auf Durchlaß. Analog kann der Manipulator nach Anspruch 7 als schließbare Blendenöffnung für Teilchen- und Lichtstrahlen dienen. Besonders vorteilhafte Weiterbildungen sind in den Ansprüchen 8 bis 10 gekennzeichnet. Ein oder mehrere Manipulatorarme dienen dabei als Antrieb für bewegbare mikromechanische Elemente, wie Gelenke, Scheiben oder Zahnräder.

Die mit der Erfindung erzielten Vorteile liegen insbesondere darin, daß eine Bewegung in der Substratebene erfolgt. Damit können in dieser Ebene bewegbar angeordnete mechanische Elemente angetrieben werden. Mit dem mikromechanischen Manipulator wird ein Antrieb angegeben, der mikromechanische Maschinen von einem externen Antrieb unabhängig macht. Der Manipulator ist sehr vielseitig einsetzbar als optisches Element (variable Blende, variabler Spiegel), als Ventil für Gase und Flüssigkeiten, als Schalter und Relais, als Antrieb für translatorische Bewegungen und Rotationsbewegungen. Da passiv bewegbare mikromechanische Elemente bereits verwirklicht sind, werden aktive Antriebe zunehmend an Bedeutung gewinnen. Sie können vorteilhaft in der Mikrorobotik, in der Medizintechnik und als Werkzeug zur Herstellung mikromechanischer Elemente Verwendung finden.

Drei Ausführungsbeispiele der Erfindung sind in den Zeichnungen dargestellt und werden im folgenden näher beschrieben.

### Kurze Beschreibung der Zeichnungen

Es zeigen:
- Fig. 1: Schematische Darstellung eines mikromechanischen Manipulators
a) im Grundriß;
b) Schnitt durch den Manipulator bei nicht geheiztem Manipulatorarm;
c) Schnitt durch den Manipulator bei geheiztem Manipulatorarm;
- Fig. 2: Schnitt durch einen mikromechanischen Manipulator, der als Blende (bzw. Ventil) ausgebildet ist
a) bei geschlossener Blende (Ventil);
b) bei geöffneter Blende (Ventil);
- Fig. 3: einen mikromechanischen Manipulator, bei welchem zwei Manipulatorarme als Antrieb für eine Zahnscheibe dienen, wobei in Fig. 3 A - Fig. 3 E der Bewegungsablauf für eine Drehung von 60° dargestellt ist.

### Wege zur Ausführung der Erfindung

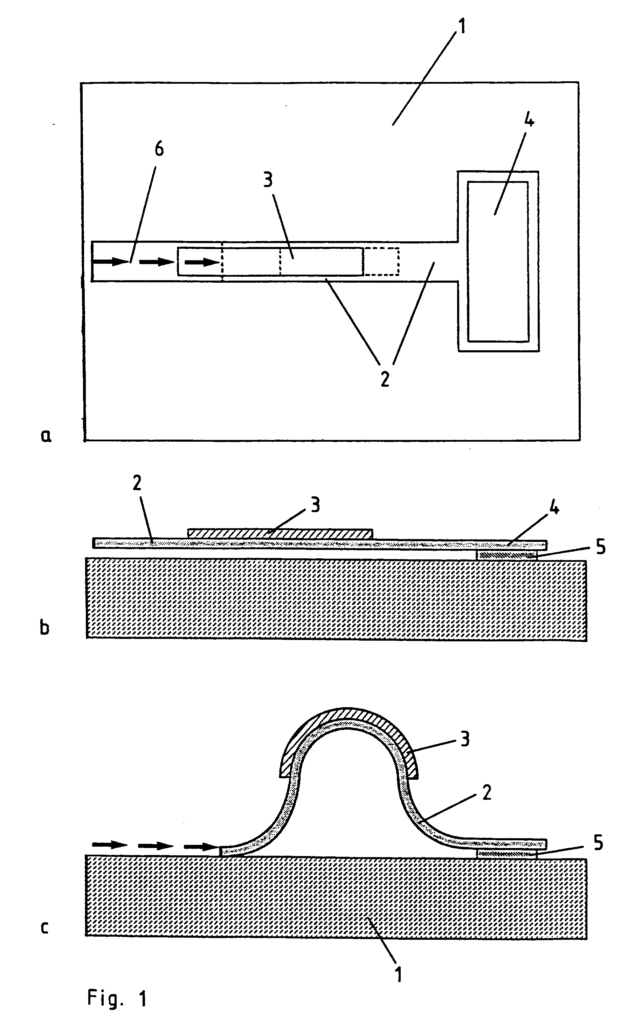

Als Substrat 1 des in Fig. 1 dargestellten mikromechanischen Manipulators dient ein Quader, der aus einem Siliziumwafer gefertigt ist. Länge und Breite des Quaders betragen einige hundert Mikrometer, die Dicke entspricht der Waferdicke von 500 µm. Der Manipulatorarm ist aus einer T-förmig ausgebildeten, etwa 0,5 µm starken Platte 2 aus Poly-Silizium und einer Metall-Schicht 3 (z. B. aus Gold) etwa derselben Stärke zusammengesetzt. Die Metallschicht bedeckt teilweise den langgestreckten Teil der T-förmigen Platte, beide sind fest miteinander verbunden.

Im Bereich des Querstückes 4 ist die Platte 2 über eine etwa 0,5 µ dünne Zwischenschicht 5 fest mit der Substratoberfläche verbunden. Das Längsstück 6 der T-förmigen Platte ist lose.

Die Materialien der Platte und der Schicht sind so gewählt, daß die Auslenkung des Manipulatorarmes bei Temperaturerhöhung in Richtung der Substratoberfläche erfolgt. Entscheidend für die Funktion des Manipulators ist, daß dieser Bewegung senkrecht zur Substratoberfläche ein mechanischer Widerstand entgegenwirkt. Das Auftreten des mechanischen Widerstandes führt zu einer Wölbung des Manipulatorarmes und zu einer Bewegung des freien Endes des Manipulatorarmes entlang der Oberfläche in Richtung des festen Endes. Diese Bewegung ist durch Pfeile in Fig. 1 a und Fig. 1 c angedeutet.

Bei Abkühlung des Manipulatorarmes verläuft die Bewegung entlang der Oberfläche in entgegengesetzter Richtung.

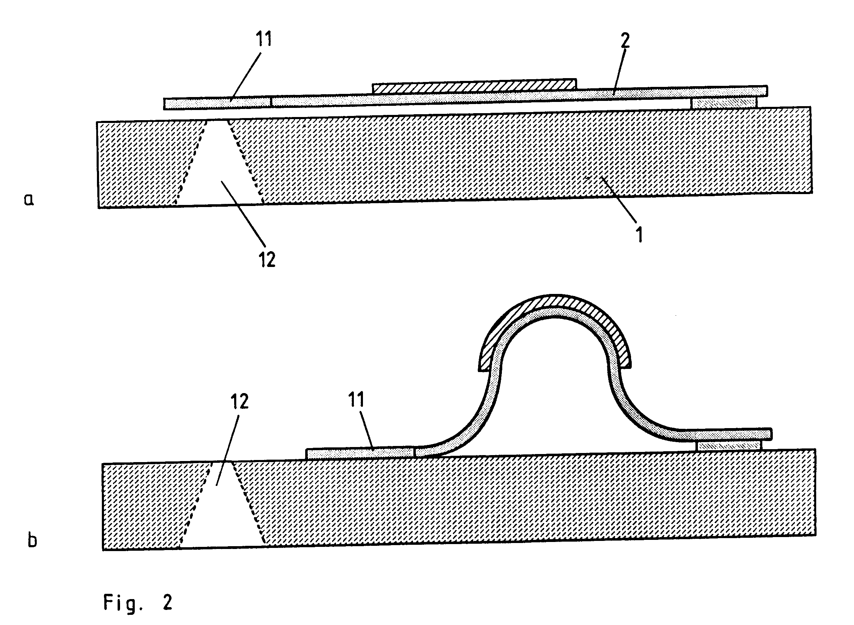

Fig. 2 zeigt die schematische Darstellung einer Weiterbildung des mikromechanischen Manipulators zu einer verschließbaren Blende für Licht- oder Teilchenstrahlen. Am losen Ende des Manipulatorarmes 2 ist eine Abdeckplatte 11 angebracht, die eine Blendenöffnung 12 im Substrat 1 abdeckt (Fig. 2a). Durch Erwärmung des Manipulatorarmes wird die Blendenöffnung freigegeben (Fig. 2b).

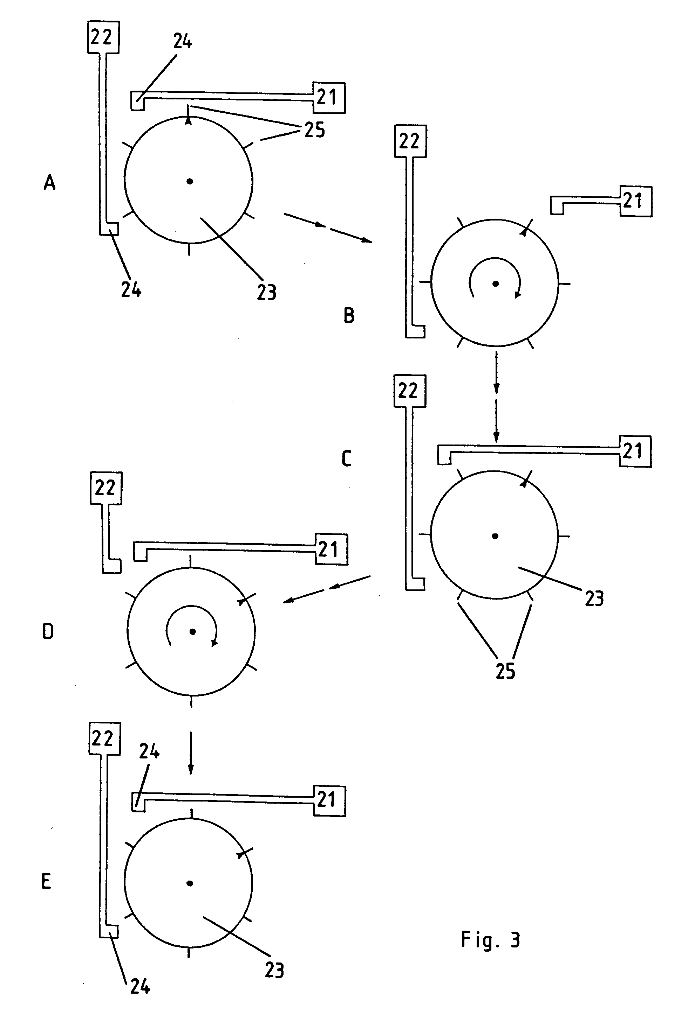

In Fig. 3 ist eine Weiterbildung des Manipulators dargestellt, bei der zwei Manipulatorarme als Antrieb für eine bewegbare Zahnscheibe dienen. Die beiden Manipulatorarme 21, 22, sind tangential zu der Kreisscheibe 23 angeordnet und schließen einen Winkel von 90° ein. Die losen Enden der Manipulatorarme sind als Haken 24 ausgebildet und können auf die Zahnscheibe einwirken. Die Zahnscheibe weist sechs stiftförmige Zähne 25 auf, deren Länge so gewählt ist, daß ein Manipulatorarm nur dann auf einen Zahn einwirken kann, wenn dieser in etwa in Richtung des Manipulatorarmes weist. Fig. 3 A zeigt die Ausgangslage; beide Manipulatorarme sind gestreckt, der mit einer Pfeilspitze bezeichnete Zahn der Zahnscheibe weist auf den Manipulatorarm 21.

Durch Erwärmung des Manipulatorarmes 21 bewegt sich dessen zum Haken 24 ausgebildetes, loses Ende entlang der Substratoberfläche und führt den bezeichneten Zahn so lange mit, bis dieser durch die Drehbewegung der Zahnscheibe aus dem Einflußbereich des Armes gedreht ist. Wie in Fig. 3 B dargestellt, weist nach dieser Drehbewegung ein anderer Zahn auf den Manipulatorarm 22. Durch Abkühlung nimmt der Manipulatorarm 21, wie in Fig. 3 C gezeigt, seine Ausgangsstellung ein, ohne die Zahnscheibe zu bewegen.

In einem nächsten Schritt, dessen Ergebnis in Fig. 3 D dargestellt ist, wird die Zahnscheibe durch Einwirkung des Manipulatorarmes 22 ein weiteres Stück gedreht. Nach Abkühlung des Armes ist die Grundstellung wieder erreicht, mit dem Unterschied, daß die Zahnscheibe um 60° gedreht ist (Fig. 3 F). Durch kontinuierliches Durchlaufen der beschriebenen Schritte wird die Zahnscheibe in Rotation versetzt.

Durch Anbringen mehrerer Manipulatorarme und Zähne werden höhere Drehgeschwindigkeiten der Scheibe und ein besserer Gleichlauf erreicht.

In einer nicht näher ausgeführten Weiterbildung dient der Mikromanipulator als Blende für Teilchen- oder Lichtstrahlen mit wählbarer Blendenöffnung. Die Zahnscheibe 23 ist mit Blendenöffnungen unterschiedlicher Durchmesser versehen, die auf einem Kreis um den Scheibenmittelpunkt angeordnet sind. Im selben Abstand vom Scheibenmittelpunkt weist das Substrat eine Öffnung auf, die durch Drehung der Scheibe mit einer Blendenöffnung von gewünschtem Durchmesser zur Deckung gebracht wird.

Bei einer weiteren Ausführung werden an der Zahnscheibe beispielsweise Schneide- oder Fräswerkzeuge angebracht, so daß sich der Manipulator zur Materialbearbeitung eignet.

Die Drehbewegungen einer oder mehrerer Zahnscheiben werden durch eine vorteilhafte Ausbildung des Manipulators wieder in Translationsbewegungen umgesetzt. Die Zähne der Zahnscheibe greifen in die Zähne einer gezahnten Rechteckplatte und verschieben diese Platte in der Substratoberfläche. Dadurch sind Translationen über Entfernungen erreichbar, die die Verschiebung eines Manipulatorarmes um ein Vielfaches übertrifft.

Alle beschriebenen Ausführungen eignen sich zur Herstellung mit den üblichen Verfahren der Mikrostrukturtechnik und Mikroelektronik. Dadurch können auf einem Chip sowohl der Manipulator als auch eine erforderliche Steuer- oder Auswerteelektronik integriert werden. Auf einem Wafer können während eines Herstellungsprozesses gleichzeitig mehrere identische mikromechanische Manipulatoren hergestellt werden.

## Patentansprüche

1. Mikromechanischer Manipulator, mit einem Substrat (1), Heizelementen und wenigstens einem Manipulatorarm, der aus einer Platte (2) aus einem ersten Material mit einem ersten thermischen Ausdehnungskoeffizienten und einer die Platte (2) wenigstens teilweise überdeckenden Schicht (3) aus einem zweiten Material mit einem zweiten thermischen Ausdehnungskoeffizienten zusammengesetzt ist, wobei die Schicht (3) einen höheren Ausdehnungskoeffizienten aufweist als die Platte (2), und der Manipulatorarm einen ersten Bereich, der fest mit der Substratoberfläche verbunden ist, und einen zweiten, losen Bereich aufweist, der bei ungeheiztem Manipulatorarm in geringem Abstand parallel zur Substratoberfläche angeordnet ist, dadurch **gekennzeichnet,** daß die Schicht (3) derartig auf der Platte (2) angeordnet ist, daß der lose Bereich bei Temperaturerhöhung sich senkrecht zur Substratoberfläche wölbt und das Ende des losen Bereichs eine Bewegung parallel zur Substratoberfläche in Richtung des ersten Bereichs durchführt und bei Temperaturerniedrigung die Bewegung umgekehrt verläuft.

2. Mikromechanischer Manipulator nach Anspruch 1, dadurch **gekennzeichnet,** daß das Substrat (1) aus einem Silizium-Wafer, die Platte (2) aus Poly-Silizium und die Schicht (3) aus Metall besteht.

3. Mikromechanischer Manipulator nach den Ansprüchen 1 und 2, dadurch **gekennzeichnet,** daß die Heizelemente als elektrische Widerstände ausgebildet sind und auf der Platte (2) oder auf der die Platte (2) bedeckenden Schicht (3) angeordnet sind, oder daß die Platte (2) oder die Schicht (3) oder beide als Heizwiderstand ausgebildet sind.

4. Mikromechanischer Manipulator nach einem der Ansprüche 1 bis 3, dadurch **gekennzeichnet,** daß alle Elemente des Manipulators auf einem Halbleiterchip integriert sind.

5. Mikromechanischer Manipulator nach einem der Ansprüche 1 bis 4, dadurch **gekennzeichnet,** daß der lose Bereich des Manipulatorarmes als langgestrecktes Rechteck ausgebildet ist.

6. Mikromechanischer Manipulator nach einem der Ansprüche 1 bis 5, dadurch **gekennzeichnet,** daß das Substrat (1) unterhalb des losen Bereiches des Manipulatorarmes eine Ventilöffnung (12) aufweist und der lose Bereich des Manipulatorarmes so ausgestaltet ist, daß er im ungeheizten Zustand die Ventilöffnung (12) verschließt.

7. Mikromechanischer Manipulator nach einem der Ansprüche 1 bis 5, dadurch **gekennzeichnet,** daß das Substrat (1) unterhalb des losen Bereiches des Manipulatorarmes wenigstens eine Blendenöffnung aufweist und der lose Bereich des Manipulatorarmes so ausgestaltet ist, daß er im ungeheizten Zustand die Blendenöffnung abdeckt.

8. Mikromechanischer Manipulator nach einem der Ansprüche 1 bis 5, dadurch **gekennzeichnet,** daß der Manipulatorarm als Antrieb für ein bewegbares Element ausgebildet ist.

9. Mikromechanischer Manipulator nach Anspruch 8, dadurch **gekennzeichnet,** daß auf einem Substrat wenigstens zwei Manipulatorarme (21, 22) tangential um eine drehbar gelagerte Zahnscheibe (23) angeordnet sind und daß die losen Bereiche der Manipulatorarme als Haken (24) ausgebildet sind, die auf die Zähne (25) der Zahnscheibe einwirken.

10. Mikromechanischer Manipulator nach Anspruch 9, dadurch **gekennzeichnet,** daß zwei Manipulatorarme (21, 22) senkrecht zueinander tangential um die drehbar gelagerte Zahnscheibe (23) angeordnet sind, und daß die Zahnscheibe (23) sechs gleichmäßig über den Umfang der Scheibe verteilte Zähne (25) aufweist, deren Länge so gewählt ist, daß ein Manipulatorarm nur dann auf einen Zahn (25) einwirken kann, wenn dieser in etwa in Richtung des Manipulatorarmes weist.

## Claims

1. A micromechanical manipulator having a substrate (1), heating elements and at least one manipulator arm composed of a plate (2) of a first material with a first thermal expansion coefficient and a layer (3) of a second material with a second thermal expansion coefficient which at least partially covers said plate (2), wherein said layer (3) has a higher expansion coefficient than said plate (2), and said manipulator arm has a first part, which is fixedly connected to the surface of the substrate, and a second, free part, which is disposed at a small distance parallel to said substrate surface, characterized in that said layer (3) is disposed on said plate (2) in such a manner that said free part bulges perpendicular to said substrate surface when the temperature rises and the end of said free part executes a movement parallel to said substrate surface in the direction of the first end and the movement runs in reverse when the temperature drops.

2. Micromechanical manipulator according to claim 1, characterized in that said substrate (1) consists of a silicon wafer, said plate (2) consists of polysilicon and said layer (3) consists of metal.

3. Micromechanical manipulator according to claims 1 and 2, characterized in that said heating elements are formed as electric resistances and are disposed on said plate (2) or on said layer (3) covering said plate (2), or that said plate (2) or said layer (3) or both are formed as the heating resistance.

4. Micromechanical manipulator according to one of the claims 1 to 3, characterized in that all the components of said manipulator are integrated on a semiconductor chip.

5. Micromechanical manipulator according to one of the claims 1 to 4, characterized in that said free part of said manipulator arm is designed as an extended rectangle.

6. Micromechanical manipulator according to one of the claims 1 to 5, characterized in that said substrate (1) has a valve opening (12) below said free part of said manipulator arm and said free part of said manipulator arm is formed in such a manner that in an unheated state it closes said valve opening (12).

7. Micromechanical manipulator according to one of the claims 1 to 5, characterized in that said substrate (1) has at least one shutter aperture below said free part of said manipulator arm and said free part of said manipulator arm is formed in such a manner that in an unheated state it covers said shutter aperture.

8. Micromechanical manipulator according to one of the claims 1 to 5, characterized in that said manipulator arm is formed as the drive means for movable component.

9. Micromechanical manipulator according to claim 8, characterized in that at least two manipulator arms (21, 22) are disposed tangentially about a rotating toothed disk (23) on a substrate and that said free parts of said manipulator arms are formed as hooks (24) which engage the teeth (25) of said toothed disk.

10. Micromechanical manipulator according to claim 9, characterized in that two micromanipulators (21, 22) are disposed perpendicular to one another tangentially about said rotating toothed disk (23) and that said toothed disk (23) has six teeth (25) evenly distributed around the circumference of said disk, the length of said teeth being selected in such a manner that a manipulator arm can engage a tooth (25) only when the latter is pointing approximately in the direction of said manipulator arm.

## Revendications

1. Manipulateur micromécanique avec un substrat (1), des éléments chauffants et au moins un bras de manipulateur qui se compose d'une plaque (2), réalisée en un premier matériau avec un premier coefficient de dilatation thermique, et d'une couche (3), recouvrant au moins en partie la plaque (2), réalisée en un second matériau avec un second coefficient de dilatation thermique, la couche (3) présentant un coefficient de dilatation thermique supérieur à celui de la plaque (2) et le bras de manipulateur présentant une première zone, qui est solidaire de la surface du substrat, et une seconde zone libre qui, en cas de bras de manipulateur non-chauffé, est disposée parallèlement à la surface du substrat et à une faible distance de celle-ci, caractérisé en ce que la couche (3) est disposée sur la plaque (2) de telle manière que, en cas d'augmentation de température, la zone libre se courbe perpendiculairement à la surface du substrat et que l'extrémité de la zone libre effectue un mouvement parallèlement à la surface du substrat, en direction de la première zone et que, en cas d'abaissement de température, le mouvement s'effectue inversément.

2. Manipulateur micromécanique suivant la revendication 1, caractérisé en ce que le substrat (1) consiste en une plaque gauffrée en silicium, la plaque (2) est en polysilicium et la couche (3) en métal.

3. Manipulateur micromécanique suivant les revendications 1 et 2, caractérisé en ce que les éléments chauffants se présentent sous forme de résistances électriques et sont disposés sur la plaque (2) ou sur la couche (3) recouvrant la plaque (2) ou que la plaque (2) ou la couche (3) ou les deux se présentent sous forme de résistance chauffante.

4. Manipulateur micromécanique suivant l'une des revendications 1 à 3, caractérisé en ce que tous les éléments du manipulateur sont intégrés sur un chip semi-conducteur.

5. Manipulateur micromécanique suivant l'une des revendications 1 à 4, caractérisé en ce que la zone libre du bras de manipulateur se présente sous forme de rectangle allongé.

6. Manipulateur micromécanique suivant l'une des revendications 1 à 5, caractérisé en ce que le substrat (1) présente, sous la zone libre du bras de manipulateur, une ouverture de soupape (12) et que la zone libre du bras de manipulateur se présente de telle manière que, à l'état non-chauffé, elle obture l'ouverture de soupape (12).

7. Manipulateur micromécanique suivant l'une des revendications 1 à 5, caractérisé en ce que le substrat (1) présente, sous la zone libre du bras de manipulateur, au moins une ouverture d'obturateur et que la zone libre du bras de manipulateur se présente de telle manière que, à l'état non-chauffé, elle obture l'ouverture d'obturateur.

8. Manipulateur micromécanique suivant l'une des revendications 1 à 5, caractérisé en ce que le bras de manipulateur se présente sous forme d'entraînement pour un élément mobile.

9. Manipulateur micromécanique suivant la revendication 8, caractérisé en ce que sur un substrat sont disposés, tangentiellement autour d'un disque denté (23) monté de manière rotative, au moins deux bras de manipulateur (21, 22) et que les zones libres des bras de manipulateur se présentent sous forme de crochets (24) qui agissent sur les dents (25) du disque denté.

10. Manipulateur micromécanique suivant la revendication 9, caractérisé en ce que deux bras de manipulateur (21, 22) sont disposés perpendiculaires entre eux, tangentiellement autour du disque denté (23) monté de manière rotative, et que le disque denté (23) présente six dents (25) distribuées de manière uniforme sur le pourtour du disque et dont la longueur est choisie de telle manière qu'un bras de manipulateur ne peut agir sur une dent (25) que lorsque celle-ci pointe environ en direction du bras de manipulateur.
